# EUROPEAN PATENT SPECIFICATION

(11) **EP 3 117 920 B1**
(45) Date of publication and mention of the grant of the patent: **10.05.2023**
(21) Application number: 16178935.9
(22) Date of filing: 12.07.2016
(51) Int. Cl.: B21D 43/09, B65H 5/06, B65H 20/02

(54) **A SHEET MATERIAL FEEDING APPARATUS**
BLATTMATERIALZUFUHRVORRICHTUNG
APPAREIL D'ALIMENTATION DE MATÉRIAUX EN FEUILLES

(30) Priority: 13.07.2015 JP 2015139600
(43) Date of publication of application: 18.01.2017
(73) Proprietor: Sankyo Seisakusho Co., Tokyo 114-8538 (JP)
(72) Inventor: SUZUKI, Kengo, Shizuoka (JP)
(74) Representative: Gevers Patents

(56) References cited:
- EP-A2- 0 364 017
- WO-A2-2012/027273
- DE-U1-202006 009 639
- JP-A- H06 170 637
- US-A1- 2009 108 522
- DATABASE WPI Week 200837 Thomson Scientific, London, GB; AN 2008-F79960 XP002764934, -& TW I 288 672 B (FUTURE POWER TECHNOLOGY CO LTD) 21 October 2007 (2007-10-21)

## Description

### BACKGROUND OF THE INVENTION

The present invention relates to a sheet material feeding apparatus that intermittently supplies a predetermined amount of a sheet material to a press apparatus or the like at high speed as well as with high accuracy.

JP-A-2013-536086 (corresponding to U.S. Pub. No. US2015/0298188A1) discloses a roll type material feeding apparatus that includes a frame, a first driven feed roll, a second feed roll, a first drive motor that rotates to drive the first driven feed roll by engaging therewith, a second drive motor that rotates to drive the first driven feed roll by engaging therewith, and a first rotational position sensor that rotates in conjunction with the first drive motor. The roll type material feeding apparatus includes speed change gears to enable the second feed roll to be driven in conjunction with the first driven feed roll. The speed change gears include a first drive gear attached to the first driven feed roll, a first driven gear that is driven with the first drive gear by engaging therewith, and an intermediate coupling member for coupling the first driven gear to the second feed roll. The second feed roll is rotatably supported in a movable roll support, and a force generating actuator provided between a frame and the movable roll support is configured to generate holding force between the second feed roll and the first driven feed roll in conjunction with the movable roll support to hold a workpiece between the second feed roll and the first driven feed roll.

The roll type material feeding apparatus in accordance with JP-A-2013-536086 transmits rotation of the first drive motor that drives the first driven feed roll by engaging therewith to the second feed roll through the speed change gears to enable the second feed roll to be driven in conjunction with the first driven feed roll. In this way, the gears transmit driving force to the second feed roll from the first drive motor, and thus there is a problem in which the gears with backlash deteriorate stopping accuracy of the second feed roll to cause deterioration of accuracy of feed length of the sheet material to be fed. There is also a problem in which using the gears allows teeth of a drive gear and teeth of a driven gear to be brought into contact with each other to wear the teeth, thereby causing backlash to increase over time due to the wear. Although it is possible to lubricate the gears to reduce wear of the gears as much as possible, there is a problem of large maintenance costs.

The roll type material feeding apparatus in accordance with JP-A-2013-536086 also allows the force generating actuator to lift the movable roll support that supports the second feed roll to release a workpiece held between the second feed roll and the first driven feed roll, however, there is a problem in which lifting the movable roll support requires a motor with large capacity or the like to be used as the force generating actuator.

JP-A-2009-106990 (corresponding to U.S. Pub. No. US2009/0108522A1) discloses a sheet material feeding apparatus that intermittently supplies a sheet material to a press apparatus, and that includes a main roll and a sub roll to clamp the sheet material and vertically displaces the main roll to adjust a gap between the main roll and the sub roll in accordance with the thickness of the sheet material. The sheet material feeding apparatus is provided with a release device that includes a sub roll guide that is vertically movable integrally with the sub roll, a translating cam, and a cam follower that engages with a cam surface of the translating cam. The release device adjusts a solenoid valve in response to operation of the press apparatus to supply air to a cylinder. The air then moves the translating cam in an axial direction of the sub roll to vertically move the sub roll through the cam follower and the sub roll guide, thereby releasing and clamping the sheet material provided between both the rolls.

The release device of the sheet material feeding apparatus in accordance with JP-A-2009-106990 adjusts the solenoid valve to supply air to the cylinder, thereby moving the translating cam in the axial direction of the sub roll to release and clamp the sheet material, however, there is a problem in which a system for supplying air to the cylinder is required, and a speed of movement of the translating cam by the air is low.

DE-U-202006009639 on which the preamble of claim 1 is based discloses a device in which two feed rollers are arranged to form a transport gap for strip material to be transport, the strip material being transported through the transport gap by means of contact with each of the two feed rollers and using a clocked through-feed movement. Each feed roller has an independently controlled motor which are coupled with an electronic king shaft to ensure synchronous rotation movement of the two feed rollers.

### SUMMARY OF THE INVENTION

Thus, it is an object of the present invention to provide a sheet material feeding apparatus to solve the problems above, the sheet material feeding apparatus being capable of intermittently supplying a predetermined amount of a sheet material at high speed as well as with high accuracy to achieve reduction in cost as well as being suitable for long-life use.

According to the present invention, the object above is achieved by a sheet material feeding apparatus that includes a housing, a first roll accommodated in the housing, and a second roll accommodated in the housing and arranged vertically below the first roll. The sheet material feeding apparatus feeds a sheet material clamped between the first roll and the second roll, and further includes a first motor provided with a rotatable first motor shaft coupled to the first roll, and a second motor provided with a rotatable second motor shaft coupled to the second roll. The first motor shaft and the second motor shaft rotate at substantially the same rotation speed to allow the first roll and the second roll to rotate in synchronization with each other. The sheet material feeding apparatus further comprises: a roll support member that is movable vertically and supports the second roll as well as having a lower end provided with a cam bearing; a cam piston that is movable horizontally as well as engaging with the cam bearing so as to move the roll support member vertically when the cam piston moves horizontally; and an eccentric cam that rotates so as to move the cam positon horizontally; and in that the eccentric cam is configured to perform an adjustment of a rotation thereof including a stop of rotation halfway, the eccentric cam allows the roll support member and the second roll supported by the roll support member to be moved vertically by moving the cam piston horizontally in accordance with the adjustment of the rotation of the eccentric cam so as to clamp or release the sheet material.

A preferred aspect of the present invention is achieved by the sheet material feeding apparatus in which a difference between a moment of inertia of the first roll and that of the second roll is 0.01% or less.

Yet another preferred aspect of the present invention is achieved by the sheet material feeding apparatus including a control device that transmits a control signal to at least one of the first motor and the second motor to rotate the first roll and the second roll in synchronization with each other.

Yet another preferred aspect of the present invention is achieved by the sheet material feeding apparatus in which the control device receives a signal of rotation speed of at least one of the first roll and the second roll to process the received signal of rotation speed.

Yet another preferred aspect of the present invention is achieved by the sheet material feeding apparatus in which the first motor shaft and the second motor shaft rotate in response to a signal received from outside the sheet material feeding apparatus.

Yet another preferred aspect of the present invention is achieved by the sheet material feeding apparatus in which the second roll and the second motor shaft are coupled to each other through a joining device that allows the second roll to be movable vertically with respect to the second motor shaft.

Yet another preferred aspect of the present invention is achieved by the sheet material feeding apparatus in which the second roll is movable vertically with respect to the second motor shaft in response to the signal received from outside the sheet material feeding apparatus.

Yet another preferred aspect of the present invention is achieved by the sheet material feeding apparatus including a first elastic member that has an end fixed to the housing as well as a central portion fixed to the roll support member.

Yet another preferred aspect of the present invention is achieved by the sheet material feeding apparatus including a second elastic member that has an end fixed to the housing as well as a central portion fixed to the roll support member, the second elastic member being arranged vertically below the first elastic member.

The object of the present invention is also by a method of using the sheet material feeding apparatus above.

A preferred aspect of the present invention is achieved by a method as described above used for manufacturing a structure by working the sheet material.

In the present invention, the motor shaft provided in each of the motors is coupled to the corresponding roll to rotate the roll, and thus a heavy object can be fed to enable feeding capacity to be increased. In addition, gears such as used in JP-A-2013-536086 are not used, thereby achieving the following effects: no backlash can improve accuracy of feed length of the sheet material to be fed; eliminating wear of teeth caused by engagement of the teeth can improve accuracy of feed length of the sheet material over time, and thus maintenance costs can be reduced; and reducing a difference between moments of inertia of the respective rolls to 0.01% or less enables the respective rolls to be rotated in synchronization with each other. Further, the following effects are also achieved: controlling a rotation speed of each of the motor shafts by a control signal transmitted from the control device enables the respective rolls to be rotated in synchronization with each other; allowing the control device to process a control signal of detected rotation speed of each of the rolls, as well as controlling a rotation speed of each of the motor shafts by using the processed control signal, enables the respective rolls to be rotated further in synchronization with each other; and rotating each of the motor shafts in response to an externally transmitted signal from a device working the sheet material fed from the sheet material feeding apparatus, or the like, enables the sheet material to be fed from the sheet material feeding apparatus in synchronization with a working process of the sheet material.

Furthermore, the following effects are also achieved: coupling the second roll and the second motor shaft through the joining device movable vertically enables the sheet material to be clamped and released by moving the second roll vertically without changing a vertical position of the second motor; using the cam piston movable horizontally, engaging with the cam bearing, enables the sheet material to be clamped and released by a motor with small capacity at low cost without using a motor with large capacity, such as used in JP-A-2013-536086; moving the cam piston horizontally in response to rotation of the eccentric cam coupled to the cam piston enables the sheet material to be clamped and released at high speed as well as at low cost; and moving the second roll vertically in response to the externally transmitted signal from the device working the sheet material fed from the sheet material feeding apparatus, or the like, enables the sheet material to be clamped or released in synchronization with the working process of the sheet material.

The elastic member is also provided to operate only on vertical movement of the second roll, as well as to achieve an effect of enabling reduction in horizontal runout of the second roll caused by inertial force generated when the second roll is rotated and horizontal inertial force generated when the sheet material is fed. Providing a plurality of elastic members can further increase the effect.

Using the sheet material feeding apparatus of the present invention achieves an effect of enabling the sheet material to be fed at high speed as well as with high accuracy, and an effect of enabling a structure to be manufactured from the sheet material fed by that way at high speed as well as with high accuracy.

Other objects, features, and advantages of the invention will become apparent from the following description of the embodiments of the invention taken in conjunction with the accompanying drawings.

### BRIEF DESCRIPTION OF THE DRAWINGS

Fig. 1 is a sectional schematic view of a sheet material feeding apparatus of the present invention as viewed from front;
Fig. 2 is a schematic view showing a method of controlling motors of the sheet material feeding apparatus of the present invention;
Fig. 3 is a sectional schematic view of the sheet material feeding apparatus of the present invention when a sheet material is released, as viewed from side;
Fig. 4 is a sectional schematic view of the sheet material feeding apparatus of the present invention when the sheet material is clamped, as viewed from side;
Fig. 5 is an enlarged sectional schematic view of a portion A of Fig. 3;
Fig. 6 is an enlarged sectional schematic view of a portion A of Fig. 4; and
Fig. 7 is a perspective view showing a relationship among a roll shaft, a joining device, and a motor shaft of the sheet material feeding apparatus of the present invention.

### DETAILED DESCRIPTION OF THE EMBODIMENT

Although an embodiment of the present invention will be described below with reference to drawings, the present invention is not limited to the embodiment but by the appended claims.

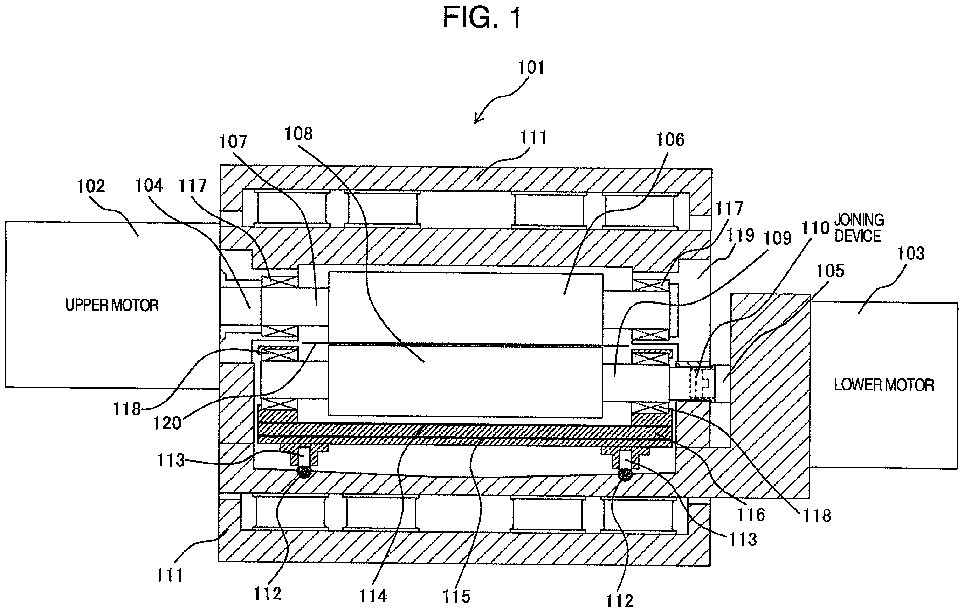

The embodiment of the sheet material feeding apparatus of the present invention will be described with reference to Figs. 1 to 7. A schematic view of a sheet material feeding apparatus 101 is shown in FIG. 1. The sheet material feeding apparatus 101 includes a housing 111, a first roll (upper roll 106) accommodated in the housing 111, and a second roll (lower roll 108) that is accommodated in the housing 111 and is arranged vertically below the upper roll 106. The upper roll 106 and the lower roll 108 are brought into contact with a sheet material 120 to clamp it, and then the upper roll 106 and the lower roll 108 rotate to feed the clamped sheet material 120. The sheet material feeding apparatus 101 includes a first motor (upper motor 102) provided with a rotatable first motor shaft (upper motor shaft 104), and a second motor (lower motor 103) provided with a rotatable second motor shaft (lower motor shaft 105). The upper motor shaft 104 is coupled to the upper roll 106 through an upper roll shaft 107, and the lower motor shaft 105 is coupled to the lower roll 108 through a lower roll shaft 109. Coupling by that way allows the upper roll 106 supported by upper roll bearings 117 to be rotated with respect to the housing 111 by the upper motor shaft 104, and the lower roll 108 supported by lower roll bearings 118 to be rotated with respect to the housing 111 by the lower motor shaft 105, and thus the rolls 106 and 108 are rotated by the motor shafts 104 and 105, respectively. As a result, the sheet material with large weight also can be fed, and thus the sheet material feeding apparatus 101 with high feeding capacity can be provided.

An eccentric flange 119 is attached to the housing 111 of the sheet material feeding apparatus 101, and the eccentric flange 119 includes a substantially cylindrical outer peripheral surface formed by centering an eccentric axis displaced from an axis of the upper roll 106, and a substantially cylindrical inner peripheral surface that is concentric with the axis of the upper roll 106. The upper roll shaft 107 supported by upper roll bearings 117 and provided at axially opposite ends of the upper roll 106 is rotatably attached to the housing 111 through the eccentric flange 119, and then the eccentric flange 119 is rotated around the eccentric axis with respect to the housing 111 to allow the upper roll 106 to be vertically displaced.

A difference between a moment of inertia of the upper roll 106 and a moment of inertia of the lower roll 108 is 0.01% or less, is preferably 0.005% or less, and is more preferably 0.001 % or less. Equalizing the moment of inertia of the upper roll 106 and the moment of inertia of the lower roll 108 to each other equalizes a load of each of the motor shafts 104 and 105 with respect to one of the corresponding rolls 106 and 108, and thus rotating the upper motor shaft 104 and lower motor shaft 105 at substantially the same rotation speed facilitates rotating the upper roll 106 and lower roll 108 in synchronization with each other.

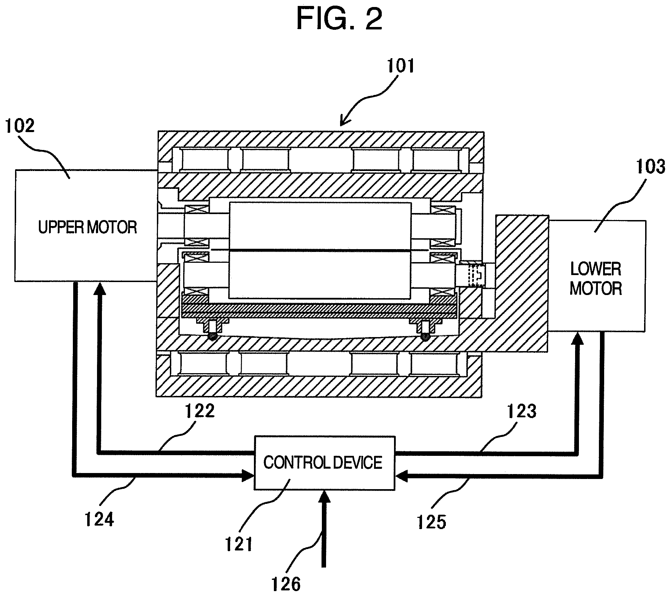

As shown in Fig. 2, the upper motor 102 and the lower motor 103 may be connected to a control device 121. The control device 121 may be arranged inside the sheet material feeding apparatus 101, or outside the sheet material feeding apparatus 101. The control device 121 is composed of a programmable logic controller (PLC), and the like. The control device 121 is programed to enable control signals 122 and 123 to be outputted to the upper motor 102 and the lower motor 103, respectively. For example, if the upper motor shaft 104 and the lower motor shaft 105 are set to be rotated in synchronization with each other at a predetermined rotation speed, the control device 121 outputs the control signals 122 and 123 to the upper motor 102 and the lower motor 103, respectively, and then servo amplifiers provided in the upper motor 102 and the lower motor 103 process the control signals 122 and 123, respectively, thereby rotating the upper motor shaft 104 and the lower motor shaft 105 at the predetermined rotation speed.

The sheet material feeding apparatus 101 also includes a rotation angle sensor that measures rotation angles of the upper roll 106 and the lower roll 108 to detect rotation speeds thereof. The rotation angle sensor includes, for example, a magnetic resolver, and an optical encoder. The control device 121 receives signals 124 and 125 of the rotation speeds detected by the rotation angle sensor to determine whether the detected rotation speeds correspond to the predetermined rotation speed, and then outputs the control signals 122 and 123 to the upper motor 102 and the lower motor 103, respectively, so that the upper roll 106 and the lower roll 108 can be rotated at the predetermined rotation speed in synchronization with each other. In this way, controlling rotation speeds of the respective motor shafts 104 and 105 by using the control signals 122 and 123 based on determination of the rotation speeds 124 and 125 of the rolls 106 and 108, respectively, enables the respective rolls 106 and 108 to be rotated in synchronization with each other.

The sheet material feeding apparatus 101 may receive an external signal 126 so that the upper motor shaft 104 and the lower motor shaft 105 can be rotated in response to the external signal 126. For example, the sheet material feeding apparatus 101 may receive the signal 126 from a press apparatus that presses the sheet material 120 fed from the sheet material feeding apparatus 101. The control device 121 receives the external signal 126, and then can control the sheet material 120 to be fed from the sheet material feeding apparatus 101 so as to synchronize with a working process of an apparatus that works the fed sheet material 120, such as a press apparatus, by allowing the rolls 106 and 108 to be rotated through the control signals 122 and 123, respectively.

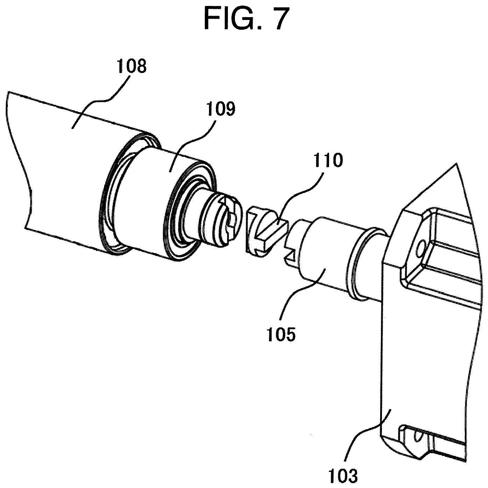

In Fig. 7, a perspective view illustrating a relationship among the lower roll shaft 109 of the lower roll 108, a joining device 110, and the lower motor shaft 105 of the lower motor 103, is shown. In the sheet material feeding apparatus 101, the lower roll shaft 109 and the lower motor shaft 105 are coupled to each other through the joining device 110. As the joining device 110, there is an available device that allows the lower roll 108 to be movable vertically upward through the lower roll shaft 109 when the sheet material 120 needs to be clamped, and that allows the lower roll 108 to be movable vertically downward through the lower roll shaft 109 when the sheet material 120 needs to be released. This kind of joining device includes an Oldham's coupling, for example. The joining device 110 can allow the lower roll 108 to be moved vertically without changing a position of the lower motor 103 to clamp or release the sheet material 120.

As shown in Fig. 1 to 4, the sheet material feeding apparatus 101 includes a roll support member 116 in the housing 111, and the roll support member 116 rotatably supports opposite ends of the lower roll 108 through the lower roll bearings 118. The roll support member 116 is movable vertically together with the lower roll 108, or can be displaced vertically, and is vertically urged by elastic members 114 and 115. That is, the roll support member 116 is moved vertically to enable the sheet material 120 to be clamped or released without changing a position of the lower motor 103 by using the joining device 110. The roll support member 116 is provided at its lower end with cam bearings 113 that can roll. The cam bearing 113 includes a cam follower, and a roller follower, for example.

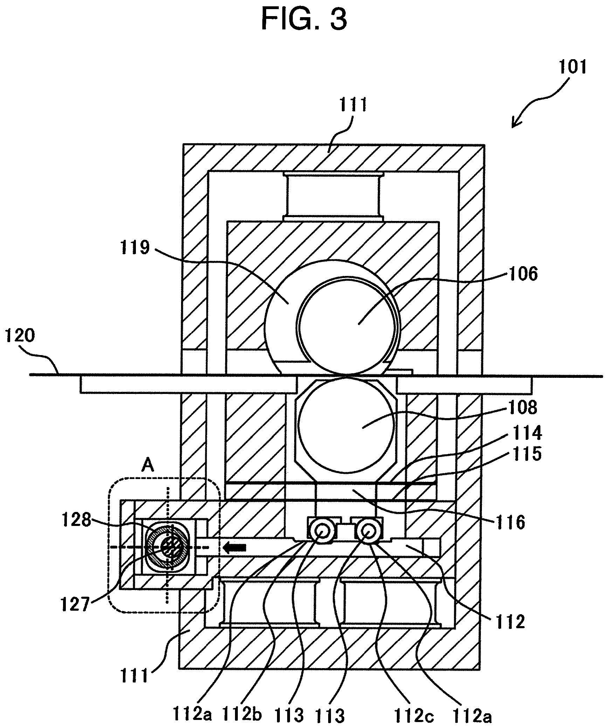

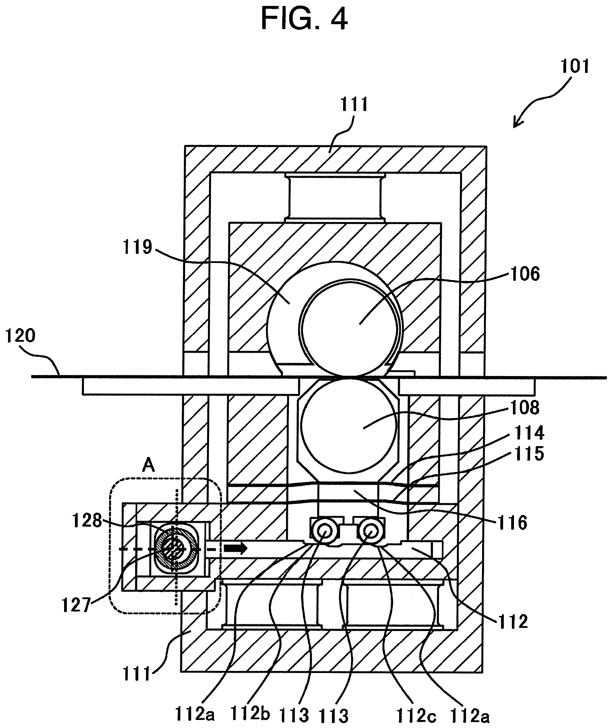

As shown in Figs. 1 to 4, the sheet material feeding apparatus 101 includes a cam piston 112 that is movable horizontally and vertically to an axis of the lower roll 108. The cam piston 112 may be movable horizontally in a direction parallel to the axis of the lower roll 108. The cam piston 112 includes cam surfaces 112a, and engages with the cam bearings 113 through the respective cam surfaces 112a. Although Figs. 3 and 4 each show the cam piston 112 including the two cam surfaces 112a that are spaced at a predetermined interval in the longitudinal direction, and that engage with the respective cam bearings 113, the numbers of the cam bearings and the cam surfaces are not limited to the numbers described above. The cam surface 112a of the cam piston 112 includes a first recessed portion 112b and a second recessed portion 112c recessed more than the first recessed portion 112b so as to allow the lower roll 108 to be movable vertically through the roll support member 116.

The cam piston 112, as shown in Figs. 3 and 4, can be moved horizontally and vertically to the axis of the lower roll 108. In Fig. 3, when the cam piston 112 is moved in the arrow direction, each of the cam bearings 113 rolls along the cam surface 112a of cam piston 112, and then engages with the second recessed portion 112c of the cam surface 112a. Engagement of the cam bearing 113 and the second recessed portion 112c allows the roll support member 116 including the cam bearings 113 to be moved vertically downward while pressed downward by the elastic members 114 and 115 by a depth of the second recessed portion 112c from the first recessed portion 112b. As a result, the lower roll 108 is moved vertically downward to enable the sheet material 120 to be released. In Fig. 4, when the cam piston 112 is moved in the arrow direction, each of the cam bearings 113 rolls along the cam surface 112a of cam piston 112, and then engages with the first recessed portion 112b of the cam surface 112a. Engagement of the cam bearing 113 and the first recessed portion 112b allows the roll support member 116 including the cam bearings 113 to be moved vertically upward against elastic force of the elastic members 114 and 115 by a height of the first recessed portion 112b from the second recessed portion 112c. As a result, the lower roll 108 supported by the roll support member 116 is moved vertically upward to enable the sheet material 120 to be clamped. In Figs. 1 to 4, although the two elastic members are arranged, one elastic member as well as three or more elastic members, are available. The elastic member may be a diaphragm.

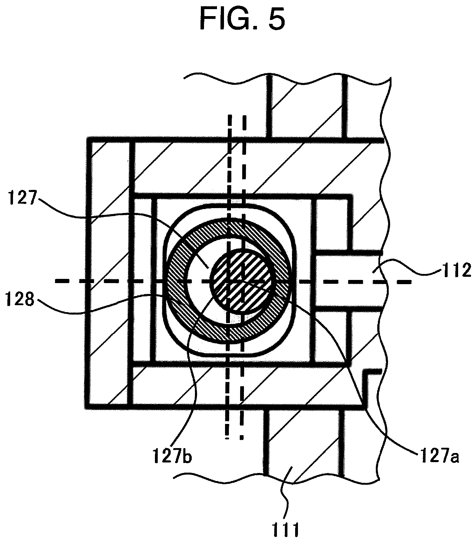

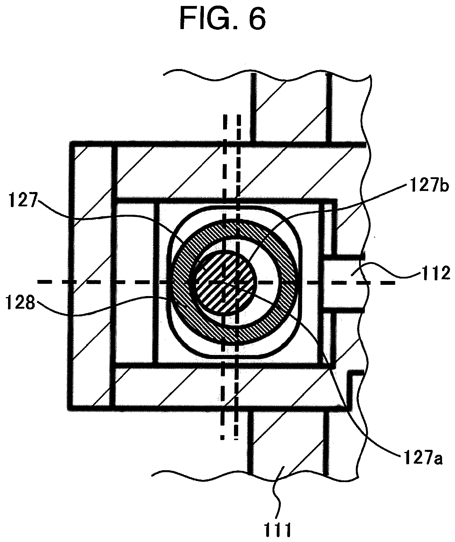

As shown in Figs. 1 to 4, the sheet material feeding apparatus 101 includes a rotatable eccentric cam 127 coupled to the cam piston 112, and an eccentric cam bearing 128 that supports the eccentric cam 127. Enlarged views of portions A in Figs. 3 and 4 are shown in Figs. 5 and 6, respectively. The eccentric cam 127 has a substantially columnar shape, and is supported by the eccentric cam bearing 128 so that an axis 127b of the substantially columnar shape is to be displaced from an axis of rotation 127a. When the eccentric cam 127 is rotated around the axis of rotation 127a of the eccentric cam 127 by a motor or the like, the axis 127b is positioned on a side opposite to the cam piston 112 with respect to the axis of rotation 127a in Fig. 5, and thus the cam piston 112 is moved in the arrow direction in Fig. 3 to allow each of the cam bearings 113 to roll into the second recessed portion 112c of the cam surface 112a. In Fig. 6, the axis 127b is positioned on the same side as the cam piston 112 with respect to the axis of rotation 127a, and thus the cam piston 112 is moved in the arrow direction in Fig. 4 to allow each of the cam bearings 113 to roll into the first recessed portion 112b of the cam surface 112a. In this way, the cam piston 112 is moved horizontally in response to the eccentric cam 127 rotating around the axis of rotation 127a to enable the sheet material 120 to be clamped or released at high speed. Using the eccentric cam in this way enables response from rotation of the eccentric cam to clamping and releasing of the sheet material to be performed at high speed, as well as enabling adjustment of the eccentric cam to be performed to stop rotation thereof halfway, for example.

The sheet material feeding apparatus 101 receives the external signal 126, and the eccentric cam 127 may be rotated in response to the external signal 126. For example, the sheet material feeding apparatus 101 may receive the signal 126 from a press apparatus that presses the sheet material 120 fed from the sheet material feeding apparatus 101. The control device 121 receives the external signal 126 to enable the sheet material feeding apparatus 101 to clamp or release the sheet material 120 to feed it to a processing apparatus so as to synchronize with a working process of the processing apparatus that works the sheet material 120 by rotating the eccentric cam 127 using a motor or the like to move the cam piston 112 horizontally to move the lower roll 108 supported by the roll support member 116 vertically.

Respective ends of the elastic members 114 and 115 are fixed to the housing 111, and respective central portions thereof are fixed to the roll support member. The elastic member 115 is arranged vertically below the elastic member 114. In this way, the sheet material feeding apparatus 101 includes the elastic members 114 and 115 to allow the elastic members 114 and 115 to urge the lower roll 108 for its vertical movement, but not to urge the lower roll 108 for its horizontal movement. As a result, it is possible to reduce horizontal runout of the lower roll 108 caused by inertial force generated when the lower roll 108 is rotated and horizontal inertial force generated when the sheet material 120 is fed.

In Figs. 1 to 4, although the two elastic members 114 and 115 are arranged, only one of the elastic members 114 and 115 may be arranged, and an elastic member may be additionally arranged. Arranging the additional elastic member can further reduce the horizontal runout of the lower roll 108.

Using the sheet material feeding apparatus 101 of the present invention such as described above can feed the sheet material 120 at high speed as well as with high accuracy, and also can intermittently feed a predetermined amount of the sheet material 120. Subsequently, a processing apparatus, such as a press apparatus, applies a working process, such as press work, to the sheet material 120 fed from the sheet material feeding apparatus 101 at high speed as well as with high accuracy. As a result, it is possible to manufacture a small-sized component to be used in an information-related apparatus, such as a cellular phone and a personal computer, and a structure, such as a motor to be used in an automobile.

It should be further understood by those skilled in the art that although the foregoing description has been made on embodiments of the invention, the invention is not limited thereto and various changes and modifications may be made without departing from the invention as defined in the appended claims.

## Claims

1. A sheet material feeding apparatus (101) comprising:-
a housing (111);
a first roll (106) accommodated in the housing (111);
a second roll (108) accommodated in the housing (111) and arranged vertically below the first roll (106), the first and second rolls being configured to feed a sheet material (120) while clamped between the first roll (106) and the second roll (108);
a first motor (102) provided with a rotatable first motor shaft (104) coupled to the first roll (106);
a second motor (103) provided with a rotatable second motor shaft (105) coupled to the second roll (108), the first motor shaft (104) and the second motor shaft (105) being configured to rotate at substantially the same rotation speed to allow the first roll (106) and the second roll (108) to rotate in synchronization with each other;
**characterized in that** the sheet material feeding apparatus (101) further comprises:
a roll support member (116) that is movable vertically and supports the second roll (108) as well as having a lower end provided with a cam bearing (113);
a cam piston (112) that is movable horizontally as well as engaging with the cam bearing (113) so as to move the roll support member (116) vertically when the cam piston (112) moves horizontally; and
an eccentric cam (127) that rotates so as to move the cam piston (112) horizontally; and
**in that** the eccentric cam (127) is configured to perform an adjustment of a rotation thereof including a stop of rotation halfway, the eccentric cam (127) allows the roll support member (116) and the second roll (108) supported by the roll support member (116) to be moved vertically by moving the cam piston (112) horizontally in accordance with the adjustment of the rotation of the eccentric cam (127) so as to clamp or release the sheet material (120).

2. The sheet material feeding apparatus (101) according to claim 1, wherein
a difference between a moment of inertia of the first roll (106) and that of the second roll (108) is 0.01% or less.

3. The sheet material feeding apparatus (101) according to claim 1 or 2, further comprising:
a control device (121) that transmits a control signal (122, 123) to at least one of the first motor (102) and the second motor (103) to rotate the first roll (106) and the second roll (108) in synchronization with each other.

4. The sheet material feeding apparatus (101) according to claim 3, wherein
the control device (121) receives a signal (124, 125) of rotation speed of at least one of the first roll (106) and the second roll (108) to process the received signal (124, 125) of rotation speed.

5. The sheet material feeding apparatus (101) according to any one of claims 1-4, wherein
the first motor shaft (104) and the second motor shaft (105) rotate in response to a signal (126) received from outside the sheet material feeding apparatus (101).

6. The sheet material feeding apparatus (101) according to claim 5, wherein
the second roll (108) is movable vertically with respect to the second motor shaft (105) in response to the signal (126) received from outside.

7. The sheet material feeding apparatus (101) according to any one of claims 1-6, further comprising:
a joining device (110) that couples the second roll (108) and the second motor shaft (105),
the joining device (110) allowing the second roll (108) to be movable vertically with respect to the second motor shaft (105).

8. The sheet material feeding apparatus (101) according to any one of claims 1 to 7, further comprising:
a first elastic member (114) that has an end fixed to the housing (111) as well as a central portion fixed to the roll support member (116).

9. The sheet material feeding apparatus (101) according to claim 8, further comprising:
a second elastic member (115) that has an end fixed to the housing (111) as well as a central portion fixed to the roll support member (116),
the second elastic member (115) being arranged vertically below the first elastic member (114).

10. A method of using the sheet material feeding apparatus (101) according to any one of claims 1 to 9 to feed the sheet material (120).

11. A method of according to claim 10, further comprising manufacturing a structure by working the fed sheet material (120).

## Patentansprüche

1. Blattmaterial-Zufuhreinrichtung (101), umfassend:-
ein Gehäuse (111);
eine erste Walze (106), die in dem Gehäuse (111) untergebracht ist;
eine zweite Walze (108), die in dem Gehäuse (111) untergebracht und vertikal unter der ersten Walze (106) angeordnet ist, wobei die erste und die zweite Walze dazu ausgelegt sind, ein Blattmaterial (120) zuzuführen, während dieses zwischen der ersten Walze (106) und der zweiten Walze (108) eingeklemmt ist;
einen ersten Motor (102), der mit einer drehbaren ersten Motorwelle (104) versehen ist, die mit der ersten Walze (106) gekoppelt ist;
einen zweiten Motor (103), der mit einer drehbaren zweiten Motorwelle (105) versehen ist, die mit der zweiten Walze (108) gekoppelt ist, wobei die erste Motorwelle (104) und die zweite Motorwelle (105) dazu ausgelegt sind, mit im Wesentlichen der gleichen Drehzahl zu drehen, um zu ermöglichen, dass die erste Walze (106) und die zweite Walze (108) in Synchronisation miteinander drehen;
**dadurch gekennzeichnet, dass** die Blattmaterial-Zufuhreinrichtung (101) weiter umfasst:
ein Walzenstützelement (116), das vertikal beweglich ist und die zweite Walze (108) stützt sowie ein unteres Ende aufweist, das mit einem Nockenlager (113) versehen ist;
einen Nockenkolben (112), der horizontal beweglich ist sowie mit dem Nockenlager (113) in Eingriff steht, um das Walzenstützelement (116) vertikal zu bewegen, wenn sich der Nockenkolben (112) horizontal bewegt; und
einen exzentrischen Nocken (127), der sich dreht, um den Nockenkolben (112) horizontal zu bewegen; und
dadurch, dass der exzentrische Nocken (127) dazu ausgelegt ist, eine Anpassung einer Drehung desselben durchzuführen, die einen Stopp der Drehung auf halber Strecke einschließt, wobei es der exzentrische Nocken (127) ermöglicht, dass das Walzenstützelement (116) und die von dem Walzenstützelement (116) gestützte zweite Walze (108) vertikal bewegt werden, indem er den Nockenkolben (112) entsprechend der Anpassung der Drehung des exzentrischen Nockens (127) horizontal bewegt, um das Blattmaterial (120) einzuklemmen oder freizugeben.

2. Blattmaterial-Zufuhreinrichtung (101) nach Anspruch 1, wobei
eine Differenz zwischen einem Trägheitsmoment der ersten Walze (106) und dem der zweiten Walze (108) 0,01 % oder weniger beträgt.

3. Blattmaterial-Zufuhreinrichtung (101) nach Anspruch 1 oder 2, weiter umfassend:
eine Steuervorrichtung (121), die ein Steuersignal (122, 123) an mindestens einen aus dem ersten Motor (102) und dem zweiten Motor (103) überträgt, um die erste Walze (106) und die zweite Walze (108) in Synchronisation miteinander zu drehen.

4. Blattmaterial-Zufuhreinrichtung (101) nach Anspruch 3, wobei
die Steuervorrichtung (121) ein Drehzahlsignal (124, 125) von mindestens einer aus der ersten Walze (106) und der zweiten Walze (108) empfängt, um das empfangene Drehzahlsignal (124, 125) zu verarbeiten.

5. Blattmaterial-Zufuhreinrichtung (101) nach einem der Ansprüche 1-4, wobei
die erste Motorwelle (104) und die zweite Motorwelle (105) in Reaktion auf ein Signal (126) drehen, das von außerhalb der Blattmaterial-Zufuhreinrichtung (101) empfangen wird.

6. Blattmaterial-Zufuhreinrichtung (101) nach Anspruch 5, wobei
die zweite Walze (108) in Reaktion auf das von außen empfangene Signal (126) in Bezug auf die zweite Motorwelle (105) vertikal bewegt werden kann.

7. Blattmaterial-Zufuhreinrichtung (101) nach einem der Ansprüche 1-6, weiter umfassend:
eine Verbindungsvorrichtung (110), die die zweite Walze (108) und die zweite Motorwelle (105) koppelt,
wobei es die Verbindungsvorrichtung (110) ermöglicht, dass die zweite Walze (108) in Bezug auf die zweite Motorwelle (105) vertikal bewegt werden kann.

8. Blattmaterial-Zufuhreinrichtung (101) nach einem der Ansprüche 1 bis 7, weiter umfassend:
ein erstes elastisches Element (114), das ein Ende aufweist, das am Gehäuse (111) befestigt ist, sowie einen zentralen Abschnitt, der am Walzenstützelement (116) befestigt ist.

9. Blattmaterial-Zufuhreinrichtung (101) nach Anspruch 8, weiter umfassend:
ein zweites elastisches Element (115), das ein Ende aufweist, das am Gehäuse (111) befestigt ist, sowie einen zentralen Abschnitt, der am Walzenstützelement (116) befestigt ist,
wobei das zweite elastische Element (115) vertikal unter dem ersten elastischen Element (114) angeordnet ist.

10. Verfahren zur Verwendung der Blattmaterial-Zufuhreinrichtung (101) nach einem der Ansprüche 1 bis 9, um das Blattmaterial (120) zuzuführen.

11. Verfahren nach Anspruch 10, das weiter das Herstellen einer Struktur durch Bearbeiten des zugeführten Blattmaterials (120) umfasst.

## Revendications

1. Appareil d'alimentation en matériau en feuille (101) comprenant :
un logement (111) ;
un premier rouleau (106) logé dans le logement (111) ;
un second rouleau (108) logé dans le logement (111) et agencé verticalement au-dessous du premier rouleau (106), les premier et second rouleaux étant configurés pour alimenter un matériau en feuille (120) tout en étant serré entre le premier rouleau (106) et le second rouleau (108) ;
un premier moteur (102) pourvu d'un arbre de rotation de premier moteur (104) couplé au premier rouleau (106) ;
un second moteur (103) pourvu d'un arbre de rotation de second moteur (105) couplé au second rouleau (108), l'arbre de premier moteur (104) et l'arbre de second moteur (105) étant configurés pour tourner sensiblement à la même vitesse de rotation pour permettre au premier rouleau (106) et au second rouleau (108) de tourner en synchronisation l'un avec l'autre ;
**caractérisé en ce que** l'appareil d'alimentation en matériau en feuille (101) comprend en outre :
un élément de support de rouleau (116) qui est mobile verticalement et qui supporte le second rouleau (108) tout en présentant une extrémité inférieure pourvue d'un palier de came (113) ;
un piston de came (112) qui est mobile horizontalement tout en s'engageant avec le palier de came (113) de manière à déplacer l'élément de support de rouleau (116) verticalement lorsque le piston de came (112) se déplace horizontalement ; et
une came excentrique (127) qui tourne de manière à déplacer le piston de came (112) horizontalement ; et
**en ce que** la came excentrique (127) est configurée pour effectuer un ajustement d'une rotation de celle-ci incluant un arrêt de rotation à mi-chemin, la came excentrique (127) permet à l'élément de support de rouleau (116) et au second rouleau (108) supporté par l'élément de support de rouleau (116) d'être déplacés verticalement par le déplacement du piston de came (112) horizontalement en fonction de l'ajustement de la rotation de la came excentrique (127) de manière à serrer ou relâcher le matériau en feuille (120).

2. Appareil d'alimentation en matériau en feuille (101) selon la revendication 1, dans lequel
une différence entre un moment d'inertie du premier rouleau (106) et celui du second rouleau (108) est 0,01 % ou moins.

3. Appareil d'alimentation en matériau en feuille (101) selon la revendication 1 ou 2, comprenant en outre :
un dispositif de commande (121) qui transmet un signal de commande (122, 123) à au moins l'un parmi le premier moteur (102) et le second moteur (103) pour faire tourner le premier rouleau (106) et le second rouleau (108) en synchronisation l'un avec l'autre.

4. Appareil d'alimentation en matériau en feuille (101) selon la revendication 3, dans lequel
le dispositif de commande (121) reçoit un signal (124, 125) de vitesse de rotation d'au moins l'un parmi le premier rouleau (106) et le second rouleau (108) pour traiter le signal (124, 125) reçu de vitesse de rotation.

5. Appareil d'alimentation en matériau en feuille (101) selon l'une quelconque des revendications 1-4, dans lequel
l'arbre de premier moteur (104) et l'arbre de second moteur (105) tournent en réponse à un signal (126) reçu depuis l'extérieur de l'appareil d'alimentation en matériau en feuille (101).

6. Appareil d'alimentation en matériau en feuille (101) selon la revendication 5, dans lequel
le second rouleau (108) est mobile verticalement par rapport à l'arbre de second moteur (105) en réponse au signal (126) reçu de l'extérieur.

7. Appareil d'alimentation en matériau en feuille (101) selon l'une quelconque des revendications 1-6, comprenant en outre :
un dispositif d'assemblage (110) qui couple le second rouleau (108) et l'arbre de second moteur (105),
le dispositif d'assemblage (110) permettant au second rouleau (108) d'être mobile verticalement par rapport à l'arbre de second moteur (105).

8. Appareil d'alimentation en matériau en feuille (101) selon l'une quelconque des revendications 1 à 7, comprenant en outre :
un premier élément élastique (114) qui présente une extrémité fixée au logement (111) ainsi qu'une partie centrale fixée à l'élément de support de rouleau (116).

9. Appareil d'alimentation en matériau en feuille (101) selon la revendication 8, comprenant en outre :
un second élément élastique (115) qui présente une extrémité fixée au logement (111) ainsi qu'une partie centrale fixée à l'élément de support de rouleau (116),
le second élément élastique (115) étant agencé verticalement au-dessous du premier élément élastique (114).

10. Procédé d'utilisation de l'appareil d'alimentation en matériau en feuille (101) selon l'une quelconque des revendications 1 à 9 pour alimenter le matériau en feuille (120).

11. Procédé selon la revendication 10, comprenant en outre la fabrication d'une structure par le travail du matériau en feuille (120) alimenté.
